# DEMANDE DE BREVET EUROPEEN

(11) **EP 4 775 385 A1**
(43) Date de publication de la demande: **15.07.2026**
(21) Numéro de dépôt: 26151012.7
(22) Date de dépôt: 09.01.2026
(51) Int. Cl.: B29C 65/32, B29C 65/36, B29C 65/46, B29C 65/74, B29C 65/78, B29C 65/18, B29L 31/00

(54) **DISPOSITIF DE THERMOSCELLAGE PAR INDUCTION D'UN FILM PLASTIQUE POUR L'OPERCULAGE DE CONTENANTS**

(30) Priorité: 10.01.2025 FR 2500242
(71) Demandeur: Groupe Guillin, 25290 Ornans (FR)
(72) Inventeur: JOULAUD, Jean-Luc, 39570 Montmorot (FR)
(74) Mandataire: Cabinet Bleger-Rhein-Poupon

(57) **Abrégé**

Dispositif de thermoscellage par induction d'un film (4) plastique pour l'operculage de contenants (3) munis d'une bordure périphérique de scellage, le dispositif comportant un support (2) inférieur doté d'un orifice empreinte de passage du contenant (3) bordé d'un rebord (15) périphérique sur lequel repose ladite bordure et un bloc (1) supérieur comprenant des moyens de chauffage par induction électromagnétique (8).

Le bloc (1) supérieur et le support (2) inférieur sont en matériau rigide non conducteur. Lesdits moyens d'induction électromagnétique (8) sont disposés dans un logement (5) périphérique du bloc (1) supérieur s'étendant le long et au droit dudit rebord (15). En outre, le bloc (1) supérieur comporte un joint (7) périphérique supérieur disposé en face du rebord (15) du support (2).

## Description

La présente invention concerne de manière générale l'operculage de récipients par un film plastique, par thermoscellage dudit film sur une bordure du récipient. Plus précisément, elle concerne un dispositif de thermoscellage par induction configuré pour fonctionner avec ce type d'opercule. L'invention ayant plus particulièrement vocation à s'appliquer à la fermeture de contenants alimentaires, ladite fermeture doit être hermétique. La tendance étant à l'utilisation de contenants réemployables, les contenants alimentaires concernés par l'invention sont de préférence fabriqués dans des matériaux rigides, voire épais, tels que l'inox, la porcelaine, la céramique, le verre, etc.

Actuellement, les matières utilisées pour les contenants privilégient le plastique, le carton ou la cellulose, et les machines de conditionnement par scellage d'un film souple sur un tel contenant utilisent majoritairement la technologie par conduction thermique, suivant laquelle le contenant et le film sont contraints en force sur une surface plane, chaude et rigide, de la machine. La surface chaude est généralement en aluminium, bon conducteur de la chaleur, qui transmet la chaleur à l'interface entre le contenant et le film et permet ainsi d'activer le scellage entre eux. Étant donné la relative souplesse des contenants fabriqués dans les matériaux évoqués, la pression d'application du film est sensiblement uniforme sur l'ensemble du pourtour du contenant, de sorte que le scellement obtenu est régulier et étanche sur toute sa longueur.

Les contenants rigides réalisés dans des matériaux réutilisables visés par l'invention peuvent en revanche s'avérer irréguliers en termes d'état de surface et/ou de planéité, ce qui rend difficile le transfert de chaleur d'une surface chaude de la machine de conditionnement, elle aussi rigide, au récipient. Des solutions à cette problématique ont été proposées, par exemple celle qui est décrite dans le document FR 2826336 A1 qui propose d'améliorer le transfert de chaleur vers les contenants rigides en verre ou en porcelaine par l'intermédiaire d'un élément presseur en matériau déformable élastiquement, qui est également l'élément chauffant. Cette configuration, basée sur un contact en pression, reste cependant très imparfaite car elle s'avère en pratique toujours dépendante de l'établissement d'un bon contact thermique, et elle est par ailleurs également tributaire du coefficient de conduction thermique du matériau à chauffer. Celui-ci peut ralentir sensiblement le transfert thermique, et par conséquent augmenter sensiblement les durées nécessaires au scellage. Par ailleurs, le contact direct a aussi l'inconvénient de devoir garder en permanence la plaque de chauffe chaude, afin que celle-ci soit opérationnelle lorsque l'on souhaite effectuer un scellage, sans avoir à attendre que celle-ci chauffe. Ces dépenses d'énergie ne sont, de plus, pas du tout économiques.

Pour s'affranchir du chauffage par contact direct, l'invention propose d'utiliser la technologie de chauffe par induction. Cette dernière, connue en soi, repose sur l'induction électromagnétique. L'avantage principal réside dans le fait que les matériaux peuvent être chauffés sans contact avec la source d'énergie. Le corps à chauffer est plongé dans un champ électromagnétique variable, créé par la circulation d'un courant alternatif dans un élément en matériau conducteur situé à proximité du corps à chauffer, sans qu'il y ait contact avec celui-ci. De l'énergie, liée aux pertes par courants de Foucault générées par la résistance du matériau conducteur, se dissipe à l'intérieur du corps sous forme de chaleur, qui est utilisée pour chauffer des éléments placés à proximité ou au contact du corps. Le chauffage par induction, qui est par exemple bien connu pour son application aux plaques de cuisson, ne fonctionne cependant qu'avec des matériaux conducteurs de l'électricité, principalement des métaux.

Le chauffage inductif est une technologie qui est déjà employée pour le thermoscellage de contenants, notamment dans les industries de l'agroalimentaire ou de la cosmétique, par exemple pour le scellage d'un opercule sur des pots de yaourt en verre ou sur des flacons en verre, comme par exemple décrit dans le brevet EP 0 469 296 A1. L'opercule est dans ce cas constitué de plastique dans lequel est insérée une feuille d'aluminium. Il est alors serti préalablement sur le contenant, puis il est chauffé par induction, conduisant à la thermo-activation de colle, et à un scellement parfait de l'opercule sur le contenant.

Le document US 4 909 022 fait également état du scellement d'un couvercle rigide sur un contenant, le chauffage par induction visant ledit couvercle, dont le matériau est conducteur.

Alternativement, c'est le contenant qui peut être chauffé, mais il doit dès lors évidemment être au moins partiellement conducteur. A cet égard, tous les contenants métalliques à usage alimentaire en acier, acier inoxydable, fonte, aluminium, cuivre sont susceptibles d'être chauffés par induction et donc des bons candidats à cette technologie de chauffe. C'est également vrai pour des récipients en métaux amagnétiques tels que l'aluminium, l'acier inoxydable austénitiques ou le cuivre, dont l'épaisseur devra cependant être suffisamment faible pour que le chauffage par induction soit efficace. Pour ces matériaux, dont la susceptibilité magnétique est faible, la profondeur de pénétration du champ magnétique est en effet très grande. Il faut en réduire l'épaisseur pour augmenter la résistance électrique et augmenter les pertes par effet Joule. Les matériaux céramiques, la porcelaine, le verre ne sont pas intrinsèquement capables d'être chauffés par induction car non conducteurs. Il faut donc préalablement rendre le contenant adapté à cette technologie en appliquant, au moins sur la surface prévue pour le scellement, une couche électriquement conductrice.

L'objectif de l'invention est de sceller un film essentiellement en plastique sur tout type de récipient, ce qui élargit considérablement le champ d'application de l'operculage envisagé par rapport aux applications qui ont été mentionnées auparavant, avec l'avantage d'un encombrement tout à fait réduit, un nouvel outil venant remplacer l'outil traditionnel de la machine. Il y a un double avantage économique qui résulte d'une part de cette interchangeabilité qui permet de ne pas avoir besoin de changer de machine, et d'autre part du fait de ne chauffer que ponctuellement et non en continu, ce qui permet de réaliser de grandes économies d'énergie, étant précisé que l'invention peut de plus fonctionner avec et sans mise sous vide. En substance, on cherche à thermosceller des films souples souvent en plastique transparent sur des récipients solides réutilisables, sans restrictions particulières de matériaux, ce qui pose de multiples problèmes par rapport à l'utilisation de l'induction magnétique en tant que technique de chauffe dont la condition sine qua non est l'existence d'un matériau électriquement conducteur au niveau de la liaison thermoscellée.

L'invention propose à cet égard un dispositif spécifiquement conçu pour satisfaire cet objectif général, c'est-à-dire apte à réaliser un thermoscellage par induction d'un film plastique sur divers types de contenants en matériau rigide destinés à être réutilisés. Il est à noter que le scellage par induction d'un matériau plastique en feuille sur la bordure d'un contenant également en plastique est connu en soi, par exemple décrit dans le document US 5 191 181.

De fait, l'invention s'applique en pratique à un dispositif de thermoscellage par induction d'un film plastique pour l'operculage de contenants munis d'une bordure périphérique de scellage du film, et comportant un support inférieur doté d'un orifice empreinte de passage du contenant bordé d'un rebord périphérique sur lequel repose ladite bordure et un bloc supérieur surmontant le contenant et comprenant des moyens de chauffage pour le thermoscellage du film, ledit film étant placé entre le support et le bloc, l'un au moins du support et du bloc comportant des moyens d'entraînement visant à les rapprocher en vue de mettre en contact en pression le film sur la bordure périphérique du contenant.

Comme évoqué, les moyens de chauffage consistent en des moyens d'induction électromagnétique aptes à engendrer un champ magnétique variable sur toute la périphérie du rebord de l'orifice empreinte, lesdits moyens d'induction électromagnétique étant disposés dans un logement périphérique du bloc supérieur s'étendant le long et au droit dudit rebord, le bloc supérieur et le support inférieur étant en matériau rigide non conducteur.

Le chauffage par induction est généré par le champ magnétique de façon à pouvoir s'exercer à l'emplacement de la liaison par scellage, qui parcourt de fait toute la périphérie d'un récipient. C'est-à-dire qu'il doit s'exercer à proximité immédiate du rebord de l'orifice empreinte, rebord qui soutient la bordure périphérique du contenant sur la surface supérieure duquel le film est mis en pression et scellé par chauffage. Le chauffage devant être présent sur toute la périphérie de la bordure de scellement du contenant, le logement pratiqué dans le bloc supérieur décrit, dans un plan parallèle à ladite bordure, un tracé qui suit sensiblement celui de la bordure. Le support inférieur et le bloc supérieur se correspondent par conséquent, en lien avec la forme et/ou le modèle du contenant.

Le champ magnétique est généré de manière à chauffer des zones bien précises, et doit être canalisé autant que possible, d'où le choix d'un matériau rigide non conducteur pour le bloc supérieur et le support inférieur. La rigidité est au surplus choisie pour éviter tout risque de flexion parasite, notamment dans les configurations prévues pour les grands contenants, flexion qui serait susceptible d'amoindrir la qualité du scellage.

Comme on le verra plus en détail dans la suite, le dispositif de l'invention, adaptable à un grand nombre de formes de contenants par changement simultané du support inférieur et du bloc supérieur qui lui correspond, est de fait adapté au scellage :
- de films plastiques sur des contenants dont au moins une partie est conductrice de l'électricité (contenants en inox, en aluminium ou tout autre contenant non conducteur mais ayant un revêtement métallique surfacique, comme de la porcelaine avec un émail conducteur en surface de la bordure de scellage) ;
- d'un film scellant conducteur (exemple : film ayant une âme en aluminium) sur un contenant non conducteur (exemple plastique, porcelaine ou verre) ;
- d'un film scellant non conducteur et transparent sur un contenant non conducteur, en adaptant le dispositif pour que la chaleur soit transmise dans de bonnes conditions à l'interface film/contenant.

Le dispositif de l'invention apporte par conséquent une grande polyvalence pour ce qui concerne le type de matériau utilisable pour le contenant, tout en tirant le meilleur parti des avantages reconnus du chauffage par induction, à savoir :
- une chauffe locale et instantanée soit directement dans l'un des matériaux à sceller, qui permet d'augmenter grandement l'efficacité du scellage, soit indirectement dans un matériau d'un composant à placer au contact de la plage de scellement ;
- une chauffe effective seulement pendant le scellage (c'est-à-dire quelques secondes) permettant des économies d'énergie importantes en supprimant l'utilisation d'une régulation de température en continu et en évitant la préchauffe souvent longue et économiquement coûteuse du dispositif ;
- un nettoyage facile du dispositif d'abord car celui-ci reste « froid » puisqu'il n'est chauffé que pendant le scellage, ensuite du fait de l'utilisation de matériaux synthétiques pour les surfaces de contact, qui sont réputés bien plus facilement nettoyables.

Avec un film fin et souple, l'une des problématiques à résoudre pour assurer un bon scellage réside en la planéité potentiellement approximative de la surface du récipient sur laquelle le film est scellé. Une planéité correcte n'est jamais garantie sur l'ensemble du pourtour, et son défaut localisé peut entraîner un scellage insuffisant ou de mauvaise qualité en différents endroits de la périphérie du contenant. Or, un scellage partiellement défectueux du film plastique sur le récipient est absolument à éviter pour de multiples raisons, principalement celles qui ont trait à la conservation des produits operculés, dans le domaine des emballages alimentaires.

L'invention remédie à cette carence en proposant des configurations qui permettent de compenser les écarts de planéité de la bordure du contenant, toujours possibles notamment sur les contenants très rigides, comme c'est le cas pour les récipients en porcelaine, en verre ou en inox.

Selon l'invention, ce résultat est obtenu en ce que le bloc supérieur comporte un joint périphérique supérieur disposé en face du rebord du support.

En d'autres termes, dans la structure telle que décrite auparavant comprenant d'une part un support inférieur doté d'un orifice de passage du contenant bordé d'un rebord périphérique sur lequel repose la bordure du contenant à operculer et d'autre part un bloc supérieur surmontant le contenant et comprenant des moyens de chauffage pour le thermoscellage du film, le bloc supérieur est muni d'un joint positionné en regard de la périphérie du contenant.

Pour résoudre le problème secondaire d'uniformisation de la température dans la zone de scellage, tout en gardant la souplesse du contact, le joint périphérique supérieur - dont on verra dans la suite qu'il peut par exemple être en silicone - peut de plus être inséré dans une gaine tressée en matériau conducteur, par exemple de l'inox.

Selon une configuration avantageuse, la gaine peut être constituée de torons en fils métalliques de diamètre compris entre 150 µm et 400 µm.

Cette configuration de fonctionnement du dispositif de l'invention est adaptée au scellement d'un film non conducteur et transparent sur un contenant non conducteur. On peut remarquer que même dans cette conception où un élément métallique présentant une certaine rigidité est au contact du film, l'existence du joint supérieur garantit une forme de déformation élastique de la gaine tressée qui peut rattraper les irrégularités de planéité, selon la nature et l'intensité de la pression de mise en contact sélectionnée.

Dans la configuration utilisée, les fils sont suffisamment fins pour limiter l'épaisseur des torons et donc la rugosité, conférant à la gaine une surface extérieure la plus lisse possible : des fils trop gros auraient tendance à se déformer et empêcher une bonne planéité sur tout le pourtour du joint, notamment dans les courbes situées par exemple aux coins des contenants. La gaine suit en effet la forme du contenant à sceller, et sa surface extérieure se déforme évidemment plus dans les courbes. Les fils sont donc prévus suffisamment fins pour limiter les déformations de surface de la gaine tressée dans lesdites courbes.

L'utilisation d'une gaine tressée conductrice revient à réaliser un operculage via un chauffage par conduction, incluant cependant un moyen de chauffage par induction, avec les avantages notamment énergétiques y afférents. Cette solution peut notamment être utilisée pour le scellage de contenants non réemployables.

Selon une configuration préférentielle, le rebord du support peut de plus comporter un joint périphérique inférieur placé au voisinage de l'orifice empreinte, apte à entrer en contact avec la face inférieure de la bordure du récipient. Ce joint mou procure une élasticité complémentaire au moment de l'exercice de la pression sur la plage de scellage, lorsque le support inférieur et le bloc supérieur se rejoignent en phase de scellage. Son effet est renforcé par la configuration du bloc supérieur et de son joint périphérique supérieur.

De préférence, les moyens d'induction électromagnétique consistent en des boucles de fils de Litz réparties dans le logement périphérique du bloc supérieur. La répartition est adaptée à la configuration du récipient à thermosceller, elle peut notamment dépendre de la fréquence de variation du champ magnétique. Les boucles de fils de Litz sont placées dans le logement du bloc supérieur afin d'optimiser le chauffage de la plage de scellage, dont l'emplacement devient la cible en lien avec l'orientation donnée au champ magnétique variable. Le diamètre des fils de Litz, la forme des boucles, leur nombre, doivent être adaptés à chaque type de contenant. L'objectif est de chauffer de manière instantanée toute la plage de scellage avec une répartition de chaleur uniforme.

De préférence encore, les moyens d'induction magnétique sont placés à une distance du rebord du support comprise entre 4 mm et 25 mm.

Le dispositif de l'invention comporte par ailleurs un couteau métallique périphérique bordant l'extérieur du rebord périphérique du support inférieur. Ce couteau, en pratique situé à proximité des moyens d'induction magnétique, est généralement en acier dur magnétique. Il est alors aussi susceptible de chauffer de manière importante par induction, ce qui n'est pas désiré. Il devient dès lors souhaitable et avantageux de limiter cette chauffe, pour rendre plus efficace la chauffe là où elle est voulue, c'est-à-dire sur la plage de scellage. Dans ce cas, on peut choisir pour ledit couteau périphérique un matériau inox non magnétique, ou faire en sorte que le logement périphérique du bloc supérieur soit équipé de pièces de ferrite placées au-dessus des moyens d'induction magnétique, à des fins de gestion du champ magnétique. Additionnellement, des pièces en ferrite peuvent être placées, dans ledit bloc supérieur, entre les moyens d'induction électromagnétique et le couteau. Toutes ces ferrites sont disposées dans l'objectif d'orienter le champ magnétique en dehors du couteau, vers la plage de scellage.

Toujours avec le même objectif, le couteau, qui consiste en une lame périphérique d'allure cylindrique, au sens géométrique étendu de ce mot, peut comporter une pluralité de fentes orientées selon l'axe du cylindre, la largeur des fentes étant de préférence comprise entre 0,5 et 1 mm. L'existence de ces fentes permet d'éviter aux courants induits de circuler, limitant ainsi la chauffe, sachant qu'elles doivent cependant être suffisamment fines pour ne pas dégrader la découpe du film par le couteau, après l'opération de scellage.

De préférence, les joints périphériques mentionnés auparavant sont en silicone, matériau connu pour sa souplesse et capable de résister à des températures jusqu'à 300°C. En particulier, les caractères mou et souple du joint supérieur de mise en contact (au-dessus du film) permettent de plaquer le film sur le contenant et de compenser ainsi les écarts de planéité éventuels de la face supérieure de la bordure du contenant. Selon l'invention, la dureté du joint silicone supérieur est généralement comprise entre 25 et 80 shores. Ainsi, plus précisément, plus le contenant sera rigide avec de forts écarts de planéité (par exemple pour la porcelaine ou le verre), plus la dureté du joint devra être faible, typiquement de 40 shores ou même inférieure. Pour des contenants plastiques épais et moyennement rigides, la dureté pourra se situer autour de 60 shores. A l'inverse, pour des plastiques très fins et très souples, la dureté du silicone d'appui pourra être élevée, par exemple de 70 shores et plus.

La haute fréquence du champ magnétique variable qui génère le phénomène de chauffage par induction pourra être adaptée en fonction des matériaux à chauffer, de leur épaisseur et de leur perméabilité au champ magnétique. Pour rendre efficace la chauffe, il est judicieux de choisir une fréquence telle que l'épaisseur de pénétration soit de l'ordre de grandeur de l'épaisseur du matériau à chauffer. Compte tenu des gammes de matériaux envisagés, et selon l'invention, la fréquence des moyens d'induction électromagnétique est prévue comprise entre 20 kHz et 300 kHz.

Il est à noter que compte tenu de la disparité d'une part des perméabilités et des conductivités des différents matériaux à chauffer et d'autre part de leur épaisseur, il est difficile d'utiliser une unique fréquence optimisée pour tous les matériaux, fréquence qui serait alors considérée comme un compromis moyen pour rester efficace sur l'ensemble de matériaux à sceller. On peut donc prévoir d'équiper le dispositif d'un système de réglage de la fréquence connecté au générateur de fréquence.

Par ailleurs, le dispositif de thermoscellage par induction de l'invention peut comporter une enceinte extérieure apte à fonctionner sous vide ou sous atmosphère modifiée. Il peut alors être utilisé en vue de l'emballage de produits alimentaires contenus dans des contenants alimentaires sous de telles atmosphères. L'enceinte adaptée, pouvant prendre deux positions respectivement ouverte et fermée, permet une fermeture étanche propre à la modification de l'atmosphère au cours de l'opération d'emballage.

D'autres buts et avantages de la présente invention apparaîtront au cours de la description qui va suivre, se rapportant à des modes de réalisation qui ne sont donnés qu'à titre d'exemples indicatifs. La compréhension de cette description sera en particulier facilitée en référence aux dessins joints en annexe et dans lesquels :

La figure 1 montre une vue en coupe d'une première variante de configuration possible d'un dispositif de thermoscellage par induction selon l'invention, en position fermée lors d'une opération de thermoscellage ; et

La figure 2 représente une vue en coupe similaire d'une seconde variante de configuration possible d'un tel dispositif, dans la même position fermée.

En référence aux figures, le dispositif de scellage comprend un bloc 1 supérieur, qui comporte les moyens de chauffage par induction 8 et un support 2 du contenant alimentaire 3 à sceller, placé sous ledit contenant 3. Ce support 2 inférieur doit s'adapter aux diverses formes des contenants 3, ce qui se fait en pratique par modification de la forme de l'orifice de réception, que l'on désigne par conséquent sous le vocable « orifice empreinte » puisqu'il agit à la manière d'une empreinte adaptée à la forme périphérique du contenant 3. Le film de scellage 4 est situé entre le bloc 1 supérieur et le support 2 inférieur comportant l'orifice empreinte, ledit film 4 étant stocké par exemple sur un rouleau et entraîné séquentiellement dans un plan horizontal par des moyens d'entraînement non représentés. Le film 4 est immobilisé lors de chaque opération de scellage. Le dispositif est particulièrement adapté pour sceller des contenants dont l'ouverture est très large comme des ramequins, des bols, des assiettes ou des bacs rectangulaires (en opposition avec l'ouverture très petite de bouteilles ou de tubes) et ayant une bordure suffisamment large sur laquelle peut être scellé le film 4. La largeur de la bordure peut typiquement aller de quelques millimètres à un centimètre environ.

Le bloc 1 supérieur comporte un logement 5 dans lequel sont placés les moyens d'induction magnétique 8, à savoir des boucles de fils de Litz réparties dans le logement 5, lequel se développe en réalité selon une géométrie qui reprend le tracé de la bordure périphérique du contenant 3, au-dessus et à faible distance de cette dernière. A noter que le logement 5 peut recevoir des ferrites aidant à orienter le champ magnétique, dont des exemplaires peuvent aussi équiper le bloc 1 supérieur entre les moyens d'induction 8 et le couteau 9. L'objectif, déjà mentionné, est d'éviter autant que possible de chauffer le couteau 9 métallique. Le bloc 1 et le support 2 correspondent à un modèle particulier de contenant 3, et sont interchangeables et particulièrement faciles à remplacer dans la conception de la présente invention.

Un joint 6 inférieur élastomère mou et souple, de type silicone résistant à la chaleur, est positionné en dessous du support 2. Le bloc 1 supérieur comporte un autre joint 7 également mou, positionné au-dessus de la bordure du récipient 3 et du joint 6, et au-dessous du logement 5. Tous ces éléments présentent une continuité périphérique correspondant au tracé de la bordure périphérique du contenant 3, et dépendent par conséquent de la forme du contenant à sceller. Ils constituent deux ensembles cohérents, respectivement supérieur (placé au-dessus du film 4) et inférieur (placé au-dessous du film 4), qui sont interchangeables en fonction du modèle de récipient à sceller.

Le bloc 1 supérieur et le support 2 inférieur avec son orifice empreinte sont mobiles l'un par rapport à l'autre. Le bloc 1 supérieur peut être fixe et le support 2 inférieur peut monter pour le scellage, comme c'est le cas pour la configuration décrite, ou inversement. Le couteau 9 périphérique de découpe du film 4 est solidarisé à une platine 10 rigide, par exemple fabriquée en aluminium, par l'intermédiaire d'un porte-couteau 11. Le couteau 9 périphérique peut également être un élément du système dont la configuration correspond à la forme du contenant 3, et en particulier au dessin de sa périphérie. La lame périphérique du couteau 9 peut, comme mentionné, être sectionnée en des fentes réparties sur sa périphérie, brisant la continuité conductrice du matériau. Le bloc 1 supérieur et la platine 10 sont reliés par un mécanisme classique à colonnes 14 et ressorts 12, 13 de compression visant à permettre au couteau 9 de se déplacer relativement au film 4 en vue de le sectionner périphériquement après la phase de scellage.

L'environnement autour des moyens d'induction 8 doit être en matière non conductrice rigide, et le bloc 1 supérieur est ainsi réalisé en plastique rigide de type Polyoxyméthylène, Acétal, Polyétheréthercétone, Polyamide, ou en plastique connu sous la dénomination commerciale Nylon. Ces matériaux possibles peuvent être renforcés avec de la fibre de verre pour en augmenter la rigidité. Le support 2 inférieur est également en plastique rigide, possiblement réalisé avec les matériaux mentionnés. La transmission correcte de la pression du film 4 sur le contenant 3 impose de penser les dimensionnements de ces éléments en plastique en vue d'éviter les problématiques de flexion, tout en respectant l'encombrement d'un outil traditionnel chauffé par résistance. A cet égard, les colonnes 14 et ressorts 12,13 de transmission mécanique doivent être judicieusement placés pour permettre la transmission de l'effort de pression global du bloc 1 supérieur et du support 2 inférieur sur la plage de scellage de manière efficace lors de la mise en pression, notamment en limitant les flexions problématiques qui pourraient empêcher un bon scellage.

Lorsque le dispositif de l'invention est fermé, comme c'est le cas sur les figures, les moyens d'induction 8 sont placés à quelques centimètres de la bordure du contenant 3 reposant sur le rebord 15 de l'orifice empreinte, en réalité sur le joint 6 inférieur en silicone. Le métal de la bordure périphérique du contenant, si celui-ci est en métal, ou de la couche appliquée sur cette bordure, si le contenant est en matériau non conducteur, ou encore d'un film scellant muni d'une âme conductrice par exemple en aluminium, chauffe en quelques secondes.

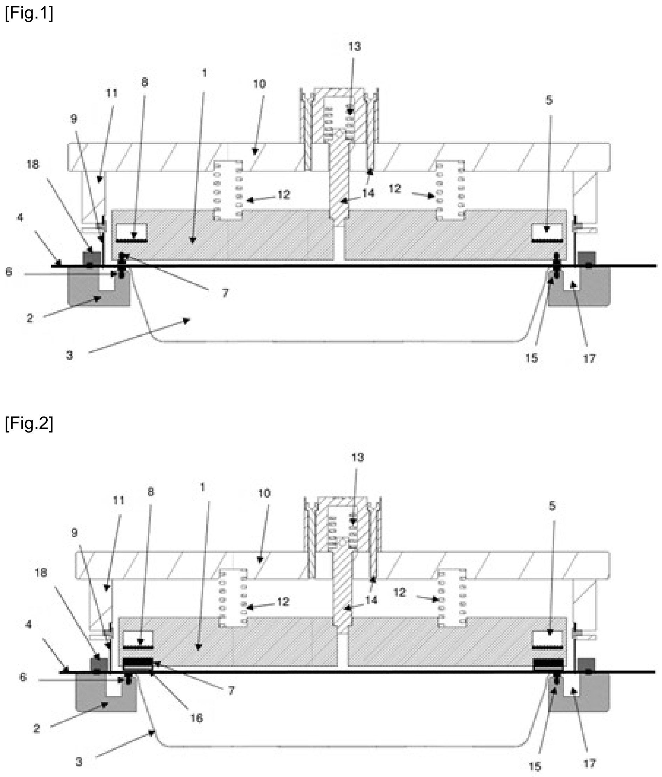

Dans la configuration de la figure 1, le joint supérieur 7 mou plaque le film 4 sur le contenant 3. La surface collante du film 4 est alors activée par conduction et le film se scelle sur la bordure du contenant 3. La force de serrage plaquant la bordure du contenant 3 sur le film 4 qui doit être conférée au dispositif de l'invention dépend en réalité de plusieurs paramètres : la surface totale à sceller, les irrégularités de surface à rattraper.

Dans la configuration de la figure 2, qui est adaptée au scellage d'un film purement plastique sur un contenant 3 non conducteur, une gaine tressée 16, entoure le joint 7, recouvrant notamment son côté faisant face à la bordure du contenant 3 reposant sur le rebord 15. Cet élément 16 chauffe par induction et active - par diffusion de la chaleur par contact - la surface collante du film 4, qui se scelle par la pression exercée sur la bordure périphérique du contenant 3.

La gaine tressée 16 peut être en inox 304, dont la largeur est de l'ordre de celle de la bordure du contenant 3, par exemple comprise entre 10 mm et 14 mm avec une épaisseur aux alentours de 0,6 à 1 mm. Elle peut être constituée de 20 à 30 torons, par exemple 24 torons, chacun constitué d'une douzaine de fils métalliques dont les diamètres sont, comme indiqué auparavant, compris entre 150 et 400 µm. Le joint 7, et par conséquent la gaine 16, suit la forme du contenant à sceller : pour un contenant rectangulaire, la gaine 16 comporte par conséquent quatre zones d'angle. Le diamètre choisi pour les fils aboutit à une déformation minimale de la surface extérieure de la gaine 16, en face de la bordure du contenant, même dans lesdites zones d'angle. La planéité reste correcte et permet un bon scellage sur toute la périphérie du récipient.

Le joint 7 inséré dans la gaine 16 peut présenter une queue d'aronde pour pouvoir le fixer dans une gorge de forme adaptée pratiquée dans le bloc 1 supérieur, en face de la surface de la bordure du contenant 3 à sceller.

En bref, pour les deux configurations faisant l'objet des figures, le fonctionnement est le suivant : le contenant 3 à sceller est posé sur le support 2 muni de son joint inférieur 6 dépassant au-dessus du rebord périphérique 15. A noter que le support 2 inférieur comporte, à l'extérieur du rebord 15, une gorge périphérique 17 qui permet de loger l'extrémité libre du couteau 9 périphérique pendant qu'il s'abaisse lors de l'opération de coupe. Toujours plus en périphérie, un système de presse-film 18 supérieur comportant des ressorts de mise en pression (non représentés) est par ailleurs prévu, assurant notamment une tension horizontale au film 4, tension qui permet de faciliter sa coupe périphérique.

En position fermée représentée sur les figures, le film 4 emprisonné entre le bloc 1 supérieur et le support 2 inférieur est en contact, au niveau de la plage de scellage, d'un côté avec ledit rebord 15 et de l'autre côté avec le joint 7 supérieur (figure 1) ou éventuellement avec une gaine tressée 16 conductrice (figure 2) entourant le joint souple en silicone 7.

Un inducteur 8 sous forme de boucles en fils de Litz réparties dans le logement 5 permet la chauffe instantanée soit du contenant 3 conducteur, soit du film conducteur 4 (figure 1), soit encore de la gaine tressée 16 (figure 2). Le joint 7 supérieur souple en silicone positionné sur le bloc 1 supérieur en plastique rigide assure la mise en contact du film 4 avec contenant 3 avec une pression adéquate. Le scellement périphérique s'effectue. Le film 4 est ensuite coupé sur le pourtour du contenant 3 par un couteau 9. La partie haute du bloc 1 supérieur en plastique et le couteau 9 sont montés sur une platine support 10 en aluminium rigide, qui est connectée électriquement (pour l'alimentation de l'inducteur 8 et de sondes de température, et autres systèmes de sécurité) à une alimentation externe par l'intermédiaire de connecteurs rapides (non représentés).

Ces connecteurs rapides sont conçus pour permettre le changement facile et rapide des éléments interchangeables, qui dépendent comme on l'a souligné de la forme du contenant 3. Le système de connecteurs rapides est notamment adapté aux hautes fréquences et à l'alimentation des fils de Litz constituant les moyens d'induction électromagnétiques 8 dans la présente invention. Le support 2 inférieur recevant le contenant 3 (partie basse du dispositif) est par ailleurs relié à un système mécanique classique de montée/descente du dispositif (non représenté).

A noter que l'adaptation du dispositif à une utilisation en mode vide et gaz est également prévue.

Les exemples de configuration qui font l'objet des figures ne doivent pas être considérés comme exhaustifs de l'invention, qui englobe au contraire les variantes de forme auxquelles on a fait allusion auparavant : forme du support 2 inférieur et agencement relatif du rebord 15 et de la gorge 17, configuration du bloc 1 supérieur et de sa liaison mécanique avec la platine 10, etc.

## Revendications

1. Dispositif de thermoscellage par induction d'un film (4) plastique pour l'operculage de contenants (3) munis d'une bordure périphérique de scellage du film (4), et comportant un support (2) inférieur doté d'un orifice empreinte de passage du contenant (3) bordé d'un rebord (15) périphérique sur lequel repose ladite bordure et un bloc (1) supérieur surmontant le contenant (3) et comprenant des moyens de chauffage pour le thermoscellage du film (4), ledit film (4) étant placé entre le support (2) et le bloc (1), l'un au moins du support (2) et du bloc (1) comportant des moyens d'entraînement visant à les rapprocher en vue de mettre en contact en pression le film (4) sur la bordure périphérique du contenant (3), les moyens de chauffage consistant en des moyens d'induction électromagnétique (8) aptes à engendrer un champ magnétique variable sur toute la périphérie du rebord (15) de l'orifice empreinte, lesdits moyens d'induction électromagnétique (8) étant disposés dans un logement (5) périphérique du bloc (1) supérieur s'étendant le long et au droit dudit rebord (15), le bloc (1) supérieur et le support (2) inférieur étant en matériau rigide non conducteur, **caractérisé en ce que** le bloc (1) supérieur comporte un joint (7) périphérique supérieur disposé en face du rebord (15) du support (2).

2. Dispositif de thermoscellage par induction d'un film plastique pour l'operculage de contenants selon la revendication précédente, **caractérisé en ce que** le joint (7) périphérique supérieur est inséré dans une gaine tressée en matériau conducteur.

3. Dispositif de thermoscellage par induction d'un film plastique pour l'operculage de contenants selon la revendication précédente, **caractérisé en ce que** la gaine est constituée de torons en fils métalliques de diamètre compris entre 150 µm et 400 µm.

4. Dispositif de thermoscellage par induction d'un film plastique pour l'operculage de contenants selon l'une des revendications précédentes, **caractérisé en ce que** le rebord (15) du support (2) comporte un joint (6) périphérique inférieur placé au voisinage de l'orifice empreinte, apte à entrer en contact avec la face inférieure de la bordure du récipient (3).

5. Dispositif de thermoscellage par induction d'un film plastique pour l'operculage de contenants selon l'une des revendications précédentes, **caractérisé en ce que** les moyens d'induction électromagnétique (8) consistent en des boucles de fils de Litz réparties dans le logement (5) périphérique du bloc (1) supérieur.

6. Dispositif de thermoscellage par induction d'un film plastique pour l'operculage de contenants selon l'une des revendications précédentes, **caractérisé en ce que** les moyens d'induction magnétique (8) sont placés à une distance du rebord (15) du support comprise entre 4 mm et 25 mm.

7. Dispositif de thermoscellage par induction d'un film plastique pour l'operculage de contenants selon l'une des revendications précédentes, **caractérisé en ce qu'**il comporte un couteau (9) métallique périphérique bordant l'extérieur du rebord (15) périphérique du support (2) inférieur.

8. Dispositif de thermoscellage par induction d'un film plastique pour l'operculage de contenants selon l'une des revendications précédentes, **caractérisé en ce que** le logement (5) périphérique du bloc (1) supérieur est équipé de pièces de ferrite placées au-dessus des moyens d'induction magnétique (8).

9. Dispositif de thermoscellage par induction d'un film plastique pour l'operculage de contenants selon l'une des revendications précédentes, **caractérisé en ce que** des pièces en ferrite sont placées, dans ledit bloc (1) supérieur, entre les moyens d'induction électromagnétique (8) et le couteau (9).

10. Dispositif de thermoscellage par induction d'un film plastique pour l'operculage de contenants selon la revendication précédente, **caractérisé en ce que** le couteau (9) consiste en une lame périphérique d'allure cylindrique comportant une pluralité de fentes orientées selon l'axe du cylindre.

11. Dispositif de thermoscellage par induction d'un film plastique pour l'operculage de contenants selon la revendication précédente, **caractérisé en ce que** la largeur des fentes est comprise entre 0,5 et 1 mm.

12. Dispositif de thermoscellage par induction d'un film plastique pour l'operculage de contenants selon l'une des revendications précédentes, **caractérisé en ce que** les joints (6, 7) périphériques sont en silicone.

13. Dispositif de thermoscellage par induction d'un film plastique pour l'operculage de contenants selon la revendication précédente, **caractérisé en ce que** la dureté du joint (7) silicone supérieur est comprise entre 25 et 80 shores.

14. Dispositif de thermoscellage par induction d'un film plastique pour l'operculage de contenants selon l'une des revendications précédentes, **caractérisé en ce que** la fréquence des moyens d'induction électromagnétique aptes à engendrer un champ magnétique variable est comprise entre 20 kHz et 300 kHz.

15. Dispositif de thermoscellage par induction d'un film plastique pour l'operculage de contenants selon l'une des revendications précédentes, **caractérisé en ce qu'**il comporte une enceinte extérieure apte à fonctionner sous vide ou sous atmosphère modifiée.
